# EUROPÄISCHE PATENTANMELDUNG

(11) **EP 4 814 222 A1**
(43) Veröffentlichungstag der Anmeldung: **30.09.2026**
(21) Anmeldenummer: 26167643.1
(22) Anmeldetag: 25.03.2026
(51) Int. Cl.: E04B 1/76

(54) **FASSADE**

(30) Priorität: 27.03.2025 AT 5002525 U
(71) Anmelder: KALLCO Development GmbH & Co KG, 1100 Wien (AT)
(72) Erfinder: EISINGER-SEWALD, Stefan, 1130 Wien (AT)
(74) Vertreter: SONN Patentanwälte GmbH & Co KG

(57) **Zusammenfassung**

Fassade (1) zur Anordnung an einer Außenwand (2) eines Gebäudes (3), aufweisend eine Dämmschicht zur Wärmedämmung, wobei eine Brandschutzschicht zur Erhöhung des Feuerwiderstands des Gebäudes (3), wobei die Brandschutzschicht zumindest eine Magnesiumsilikat, vorzugsweise Talkum, enthaltende Brandschutzplatte (5A) aufweist, wobei die Dämmschicht zumindest eine Dämmplatte (4) mit Schaumdämmstoff, vorzugsweise aus Polystyrol, aufweist.

## Beschreibung

Die Erfindung betrifft eine Fassade zur außenseitigen Anordnung an einer Außenwand eines Gebäudes, wobei die Fassade eine Dämmschicht zur Wärmedämmung aufweist.

In vielen Ländern, so auch in Österreich, wurden in den letzten Jahren die brandschutztechnischen Anforderungen verschärft. Dies betrifft vor allem höhere Gebäude mit einer Gebäudehöhe von mindestens 26 m, aber nicht mehr als 35 m, die beispielsweise in Wien umgangssprachlich als "kleine Hochhäuser" bezeichnet werden. Die Brandschutzbestimmungen für diese "kleinen Hochhäuser", deren Fluchtniveau beispielsweise zwischen 22 und 32 m betragen kann, werden in der OIB-Richtlinie 2.3 (OIB-330.2-032/23) normiert. Um die Brandschutzbestimmungen für solche Gebäude zu erreichen, wird im Stand der Technik eine Fassade verwendet, bei welcher als Dämmschicht Mineralwolle vorgesehen ist. Dabei werden Mineralwolldämmplatten an der Außenwand eines Gebäudes montiert, üblicherweise geklebt und mit Dübeln gesichert. Fassadenseitig wird die Mineralwolldämmplatte anschließend armiert und verspachtelt.

Die Mineralwolle weist sehr gute Brandschutzeigenschaften auf, so dass sich diese Fassade aus Brandschutzsicht für höhere Gebäude, auch für die erwähnten "kleinen Hochhäuser", eignet. Nachteilig ist jedoch die vergleichsweise hohe Wärmeleitfähigkeit der Dämmwolle, so dass für eine vorgegebenen Wärmedämmung beispielsweise 16 bis 18 cm Mineralwolldämmung vorgesehen werden müssen. Dadurch wird jedoch nachteiligerweise die Wandstärke der Fassade stark erhöht. Da der Außenumriss im Bebauungsplan vorgegeben ist, geht die Wandstärke der Fassade auf Kosten der Nettonutzfläche, welche mit dem Gebäude zur Verfügung gestellt werden kann. Darüber hinaus sind Mineralwolldämmplatten anfällig für Beschädigungen durch Sturmschäden, beispielsweise auf die Fassade treffende Äste, Nesthöhlen bauende Spechte oder Vandalismus.

CH 710162 A2 offenbart eine Wärmedämmplatte aus EPS mit einer Brandschutzschicht, wobei die Brandschutzschicht ein Bindemittel, beispielsweise Magnesiumzement, und Isolierperlen aus Aerogel umfasst die in das Bindemittel eingebracht sind. EP 3434478 A1 offenbart eine Zweischichtbrandschutzplatte, aufweisend eine EPS-Dämmplatte und eine feuerfeste Außenplatte aus einem anorganischen Material, beispielsweise Magnesiumoxid. DE 102006028398 A1 offenbart einen Feuerschutzplatten-Verbundbauteil, aufweisend eine Brandschutzschicht aus einem Brandschutzbaustoff und eine anorganische Trägerplatte aus Mineralfaser oder Mineralschaum.

Es ist daher Aufgabe der Erfindung, zumindest einzelne Nachteile des Standes der Technik zu lindern bzw. zu beseitigen. Die Erfindung setzt sich bevorzugt zum Ziel, eine Fassade für ein Gebäude mit verbesserter Raumnutzung zu schaffen, ohne Abstriche beim Brandschutz in Kauf nehmen zu müssen.

Diese Aufgabe wird durch eine Fassade nach Anspruch 1, ein Verfahren zur Montage einer Fassade nach Anspruch 12 und ein Gebäude nach Anspruch 14 gelöst. Bevorzugte Ausführungsformen sind in den abhängigen Ansprüchen offenbart.

Erfindungsgemäß weist die Fassade eine Brandschutzschicht zur Erhöhung des Feuerwiderstands des Gebäudes auf. Die Brandschutzschicht weist zumindest eine Magnesiumsilikat, vorzugsweise Talkum, enthaltende Brandschutzplatte auf. Die Dämmschicht weist zumindest eine Dämmplatte mit Schaumdämmstoff, vorzugsweise aus Polystyrol, auf. Der Schaumdämmstoff kann aus einem organischen Material bestehen. Folglich kann der Schaumdämmstoff flammbar sein.

Für die Zwecke dieser Offenbarung beziehen sich Orts- und Richtungsangaben wie "oben", "unten", "vertikal" und "horizontal" auf den bestimmungsgemäßen Montagezustand der Fassade an der Außenwand des Gebäudes. Insbesondere bezieht sich die Ortsangabe "Gebäudeumgebung" auf den sich horizontal von der Fassade erstreckenden Raum.

Schaumdämmstoffe bringen aufgrund ihrer Entflammbarkeit im Brandfall ein Risiko für Brandüberschlag mit sich, so dass sich ein Brand entlang der Außenwände des Gebäudes und hin zu benachbarten Gebäuden ausbreiten könnte. Daher wurden Schaumdämmstoffe bisher vor allem bei höheren Gebäuden, insbesondere mit einer Höhe von mehr als 26 m, nicht als geeignet angesehen, anstelle von Mineralwolle an Gebäudeaußenwänden verbaut zu werden. Demgegenüber bringt die Erfindung den Vorteil mit sich, dass die Dämmschicht im Brandfall durch die Magnesiumsilikat-Brandschutzplatte von einem Brand abgeschirmt ist. Die Dämmschicht wird daher von der Magnesiumsilikat-Brandschutzplatte vor Entflammung geschützt. Dies ermöglicht es, einen Schaumdämmstoff als Dämmstoff zum Einsatz zu bringen. Der Schaumdämmstoff, vorzugsweise Polystyrol, weist deutlich schlechtere Brandschutzeigenschaften als Mineralwolle auf, so dass bisher Schaumdämmstoff nicht für Fassaden von Gebäuden, insbesondere von einem Gebäude mit einer Gebäudehöhe von mindestens 26 Meter (m) verwendet werden konnten. Die Erfindung setzt daran an, dass die Magnesiumsilikat-Brandschutzplatte die Brandbeständigkeit der Fassade so weit erhöht, dass der Schaumdämmstoff ohne Verschlechterung beim Brandschutz verwendet werden kann. Der Schaumdämmstoff weist nun eine bessere Wärmedämmung auf, so dass dieselbe Wärmedämmwirkung mit einer geringeren Dicke als mit Mineralwolle erzielt werden kann. Dadurch kann die Wandstärke der Fassade gegenüber dem Stand der Technik bei gleichwertigem Wärmedämmeigenschaften und Brandschutz eine verringerte Wandstärke aufweisen. Schaumdämmstoffe verflüssigen sich bei starker Erhitzung, sodass eine Fassade ohne Brandschutzschicht im Brandfall abgetragen und der Zugang zum Gebäude bzw. die Rettung aus dem Gebäude, insbesondere durch Fenster und Türen, erschwert werden könnte. Vorteilhaft ist, wenn verflüssigte Anteile der Dämmschicht im Brandfall durch die Magnesiumsilikat-Brandschutzplatte nicht in die Gebäudeumgebung entweichen können. Die Fassade ist vorzugsweise im montierten Zustand dazu ausgebildet, im Brandfall verflüssigte Anteile der Dämmschicht zwischen Brandschutzschicht und Außenwand des Gebäudes zu sammeln.

Die Magnesiumsilikat-Brandschutzplatte ist bevorzugt so stabil ausgebildet, dass die Fassade im montierten Zustand an der Außenwand selbst bei zumindest teilweise verflüssigter Dämmschicht im Wesentlichen formfest an der Außenwand des Gebäudes verbleibt.

Die Dämmplatte ist schwer entflammbar, besonders bevorzugt nicht entflammbar.

Bevorzugt weist die Brandschutzplatte eine Brutto-Verbrennungswärme von -0,3 bis 0 MJ/kg, besonders bevorzugt im Wesentlichen -0,24 MJ/kg auf. Bevorzugt beträgt der Masseverlust der Brandschutzplatte, wenn man diese für 60 Minuten in einen im Wesentlichen auf 750°C vorgeheizten Ofen einbringt, 30 bis 40 %, vorzugsweise im Wesentlichen 38,5 %.

Bevorzugt ist die Brandschutzplatte im Wesentlichen wasserundurchlässig. Bevorzugt ist die Brandschutzplatte im Wesentlichen säurebeständig. Vorteilhaft ist es, wenn die Brandschutzplatte, beispielsweise mit einer Stichsäge, zuschneidbar ist. Vorteilhaft gegenüber dem Stand der Technik ist, dass die Brandschutzplatte unanfällig für äußere Beschädigungen ist.

Bevorzugt enthält die Dämmplatte als Schaumdämmstoff expandierten Polystyrolschaum.

Bevorzugt macht Schaumstoff einen Gewichtsanteil der Dämmplatte von mindestens 80%, besonders bevorzugt 92 - 98 %, aus.

Bevorzugt enthält die Dämmplatte Graphit. Vorteilhaft ist die vergleichsweise geringe Dichte des grafitmodifizierten Schaumstoffs.

Bevorzugt weist die Brandschutzplatte eine äußere Flachseite und eine, der äußeren Flachseite gegenüberliegende, innere Flachseite auf. Bevorzugt weist die Brandschutzplatte zumindest eine, normal auf die Flachseiten, stehende Stirnseite auf.

Bevorzugt weist die Dämmplatte eine äußere Flachseite und eine, der äußeren Flachseite gegenüberliegende, innere Flachseite auf. Bevorzugt ist im montierten Zustand der Fassade die innere Flachseite der Dämmplatte dazu ausgebildet der Außenwand des Gebäudes zugekehrt zu sein. Bevorzugt weist die Brandschutzplatte zumindest eine, normal auf die Flachseiten der Brandschutzplatte, stehende Stirnseite auf.

Hinsichtlich der Stabilität der Fassade ist es vorteilhaft, wenn die Brandschutzplatte Zement enthält. Bevorzugt enthält die Brandschutzplatte hochfesten Zement.

Darüber hinaus kann die Brandschutzplatte Dämmstoffpartikel, vorzugsweise Schaumdämmstoffpartikel, enthalten. Bevorzugt enthalten die Dämmstoffpartikel Polystyrol, besonders bevorzugt expandiertes Polystyrol (EPS). Bevorzugt sind die Dämmstoffpartikel als Dämmstoffgranulat ausgebildet. Bevorzugt sind die Dämmstoffpartikel im Wesentlichen kugelförmig ausgebildet. Bevorzugt sind die Dämmstoffpartikel im Wesentlichen über den Querschnitt der Brandschutzplatte gleichmäßig verteilt. Bevorzugt weisen die Dämmstoffpartikel jeweils zumindest einen Gashohlraum auf.

Hinsichtlich der Stabilität der Fassade ist es vorteilhaft, wenn die Brandschutzplatte mit einem Verstärkungsmaterial, vorzugsweise Glasfaser, zur Verstärkung der Brandschutzplatte verstärkt ist. Alternativ ist das Verstärkungsmaterial ein organisches Material, besonders bevorzugt Vlies, und/oder ein Metall. Bevorzugt ist das Verstärkungsmaterial als Gewebe ausgebildet. Alternativ ist das Verstärkungsmaterial als Netz und/oder Gitter ausgebildet. Bevorzugt kaschiert das Verstärkungsmaterial die äußeren Flachseite und/oder innere Flachseite der Brandschutzplatte. Alternativ ist der Aufbau der Brandschutzplatte entlang ihres Querschnitts homogen, d.h. nicht durch einen Schichtbau ausgebildet.

Bevorzugt weist die Brandschutzplatte ein Plattengewicht von 10 bis 30 kg/m2, beispielsweise 12 bis 18 kg/m2, vorzugsweise im Wesentlichen 15kg /m2 auf. Bevorzugt macht Zement einen Anteil des Plattengewichts der Brandschutzplatte von 25 bis 75 %, beispielsweise 30 bis 60%, vorzugsweise 35 bis 55 % aus. Bevorzugt macht Dämmstoff einen Anteil des Plattengewichts der Brandschutzplatte von bis zu 10 %, beispielsweise 0,5 bis 5 %, vorzugsweise 1,5 bis 3,5 % aus. Bevorzugt macht Wasser einen Anteil des Plattengewichts der Brandschutzplatte von 5 bis 25 %, beispielsweise 8 bis 20 %, vorzugsweise 10 bis 15 % aus. Bevorzugt macht das Verstärkungsmaterial einen Anteil des Plattengewichts der Brandschutzplatte bis zu 10 %, beispielsweise bis zu 5 %, vorzugsweise bis zu 2 % aus.

Bevorzugt weist die Brandschutzplatte eine Dichte von 0,5 bis 2 g/cm3, beispielsweise 0,75 bis 1,2 g/cm3, vorzugsweise im Wesentlichen 0,95 g/cm3 auf. Bevorzugt weist die Dämmplatte eine Dichte von 5 bis 30 kg/m3, beispielsweise 10 bis 25 kg/m3, vorzugsweise 17 bis 20 kg/m3 auf. Bevorzugt weist die Brandschutzplatte eine Biegefestigkeit von 7 MPa bis 10 MPa, 8 MPa bis 9 MPa, vorzugsweise im Wesentlichen 8,5 MPa auf.

Hinsichtlich der Fassade ist es vorteilhaft, wenn die Brandschutzplatte eine Wandstärke von 0,5 bis 4 cm, vorzugsweise im Wesentlichen 1,2 cm, aufweist und/oder dass die Dämmplatte eine Stärke von 5 bis 30 cm, vorzugsweise im Wesentlichen 14 cm, aufweist. Bevorzugt weist die Fassade eine Wandstärke von 5,5 cm bis 34 cm, beispielsweise 10 bis 20 cm, vorzugsweise 15 bis 16 cm auf.

Bevorzugt ist die Brandschutzplatte und/oder die Dämmplatte rechteckig ausgebildet. Bevorzugt weist die Brandschutzplatte und/oder der Dämmplatte eine Längserstreckung von 0,5 bis 4 m, beispielsweise 1 bis 3 m, vorzugsweise im Wesentlichen 2 m auf. Bevorzugt weist die Brandschutzplatte/oder der Dämmplatte eine Quererstreckung von 0,5 bis 4 m, beispielsweise 1 bis 3 m, vorzugsweise im Wesentlichen 1,4 m auf. Alternativ weist die Dämmplatte eine Längserstreckung von vorzugsweise im Wesentlichen 1 m auf und/oder eine Quererstreckung von vorzugsweise im Wesentlichen 50 cm auf.

Bei einer bevorzugten Ausführungsform weist die Brandschutzplatte eine Wärmeleitfähigkeit von 0,15 bis 0,4 W/mK, vorzugsweise im Wesentlichen 0,2 W/mK aufweist, und/oder dass die Dämmplatte eine Wärmeleitfähigkeit von 0,029 bis 0,04 W/mK, vorzugsweise im Wesentlichen 0,032 W/mK auf.

Bei einer bevorzugten Ausführungsform ist die Dämmschicht zur Anordnung zwischen der Brandschutzschicht und der Außenwand des Gebäudes vorgesehen, sodass die Dämmschicht im montierten Zustand der Fassade im Wesentlichen vollständig von der Gebäudeumgebung getrennt ist.

Bei einer bevorzugten Ausführungsform weist die Brandschutzschicht eine weitere Brandschutzplatte auf, wobei die Brandschutzplatte im montierten Zustand der Fassade an die weitere Brandschutzplatte angrenzend, vorzugsweise winkelig auf die weitere Brandschutzplatte stehend, angeordnet ist. Bevorzugt ist die Brandschutzplatte rechtwinkelig auf die weitere Brandschutzplatte stehend angeordnet. Bevorzugt ist eine Stirnseite der weiteren Brandschutzplatte bündig bezüglich der äußeren Flachseite der Brandschutzplatte angeordnet. Bevorzugt ist die Stirnseite der weiteren Brandschutzplatte an die äußere Flachseite der Brandschutzplatte angeordnet. Alternativ ist die Stirnseite der Brandschutzplatte bündig bezüglich der äußere Flachseite der weiteren Brandschutzplatte angeordnet. Bevorzugt ist ein Verbindungsbereich der Fassade, an dem die Brandschutzplatte und die weitere Brandschutzplatte aneinander angrenzen, im Wesentlichen flüssigkeitsdicht. Besonders bevorzugt ist im Verbindungsbereiche eine Schmelzsicherheitsmembran zwischen Dämmschicht und Brandschutzschicht angeordnet.

Bevorzugt weist die Dämmschicht eine weitere Dämmplatte auf. Bevorzugt werden Fugen zwischen der Dämmplatte und der weiteren Dämmplatte und/oder zwischen der Dämmschicht und der Brandschutzschicht und/oder zwischen der Brandschutzplatte und der weiteren Brandschutzplatte mit Fugendichtschaum gefüllt. Bevorzugt ist der Fugendichtschaum feuerbeständig.

Hinsichtlich der Brandschutzeigenschaften der Fassade ist es vorteilhaft, wenn die Brandschutzplatte und die weitere Brandschutzplatte im montierten Zustand der Fassade zumindest abschnittsweise an dieselbe Dämmplatte der Dämmschicht angrenzend angeordnet. Bevorzugt grenzt die weitere Brandschutzplatte an die Stirnseite der Dämmplatte und die Brandschutzplatte an die äußere Flachseite der Dämmplatte. Alternativ grenzt die weitere Brandschutzplatte an die äußere Flachseite der Dämmplatte und die Brandschutzplatte an die Stirnseite der Dämmplatte.

Bei einer bevorzugten Ausführungsform ist die weitere Brandschutzplatte, vorzugsweise eine Stirnseite der weiteren Brandschutzplatte, im montierten Zustand der Fassade zur Anordnung an der Außenwand des Gebäudes vorgesehen.

Bei einer bevorzugten Ausführungsform ist die weitere Brandschutzplatte im montierten Zustand der Fassade zur Anordnung angrenzend an einer Begrenzungskante einer Aussparung der Außenwand vorgesehen ist, wobei vorzugsweise die weitere Brandschutzplatte zum bündigen Abschluss mit einer Begrenzungsfläche der Aussparung der Außenwand vorgesehen ist. Bevorzugt ist die Brandschutzplatte im montierten Zustand der Fassade zum Abschluss mit der Begrenzungsfläche eines Fenster- oder Türenaussparung der Außenwand, d.h. einer Fenster- oder Türenlaibung vorgesehen. Bevorzugt gleicht die Orientierung der weiteren Brandschutzplatte der Orientierung der Begrenzungsfläche.

Bei einer bevorzugten Ausführungsform weist die Fassade zumindest ein, vorzugsweise als Montagewinkel ausgebildetes, Montageelement auf, wobei die weitere Brandschutzplatte im montierten Zustand der Fassade zur Fixierung durch das Montageelement an der Außenwand des Gebäudes vorgesehen ist. Bevorzugt ist das Montageelement als Montagewinkel, besonders bevorzugt als Stahlwinkel, ausgebildet. Bevorzugt ist das Montageelement hitzebeständig ausgeprägt, sodass die sinngemäße Anordnung der weiteren Brandschutzplatte auch im Brandfall aufrecht bleibt.

Bevorzugt erstreckt sich ein Schenkel des Montageelements entlang der Stirnseite der Dämmplatte und ein, besonders bevorzugt rechtwinkelig auf den Schenkel stehender, weiterer Schenkel des Montageelements entlang der inneren Flachseite der Dämmplatte. Bevorzugt erstreckt sich der Schenkel zumindest abschnittsweise entlang der weiteren Brandschutzplatte, besonders bevorzugt über die gesamte Erstreckung der weiteren Brandschutzplatte, und/oder ist mit der weiteren Brandschutzplatte fest verbunden. Bevorzugt ist der Schenkel ausgebildet sich im montierten Zustand der Fassade sich von der Außenwand des Gebäudes, vorzugsweise normal auf die Außenwand des Gebäudes, zu erstrecken. Bevorzugt erstreckt sich der Schenkel an der inneren Flachseite der weiteren Brandschutzplatte.

Bevorzugt ist die Längserstreckung des Schenkels des Montageelements größer als die Wandstärke der Dämmplatte, sodass ein Endabschnitt des Schenkels über die äußere Flachseite der Dämmplatte hinausragt. Bevorzugt ist der Endabschnitt des Schenkels im montierten Zustand der Fassade zwischen der Brandschutzplatte und der weiteren Brandschutzplatte, besonders bevorzugt an die Brandschutzplatte und die weitere Brandschutzplatte angrenzend, angeordnet. Bevorzugt ist der Endabschnitt des Schenkels mit der Brandschutzplatte fest verbunden. Bevorzugt ist in einem montieren Zustand der Fassade die Stirnseite der Brandschutzplatte an den Endabschnitt des Schenkels angrenzend angeordnet. Bevorzugt ist der weitere Schenkel im montierten Zustand der Fassade zur zumindest abschnittsweisen Anordnung zwischen der Dämmplatte und der Außenwand des Gebäudes vorgesehen.

Vorteilhaft an dieser Anordnung ist, dass das Montageelement im montierten Zustand der Fassade ausgebildet ist nicht über die Begrenzungsfläche der Aussparung der Außenwand zu ragen. Vorteilhaft an dieser Anordnung ist auch, dass das Montageelement von der Gebäudeumgebung im montierten Zustand der Fassade unzugänglich ist, sodass bzw. die weitere Brandschutzplatte nicht demontiert werden kann, ohne dass die Brandschutzplatte und die Dämmschicht zuerst demontiert worden ist.

Bevorzugt ist das Montageelement, besonders bevorzugt der weitere Schenkel des Montageelements, dazu ausgebildet im montierten Zustand der Fassade an der Außenwand des Gebäudes befestigt, besonders bevorzugt angeschraubt, zu werden.

Bei dem korrespondierenden Verfahren zur Montage einer Fassade in einer der oben beschriebenen Ausführungsvarianten an einer Außenwand eines Gebäudes, wird die Aufgabe dadurch gelöst, dass eine Dämmschicht und eine Brandschutzschicht der Fassade an der Außenwand des Gebäudes montiert werden. Bevorzugt wird die Dämmplatte an die Außenwand des Gebäudes geklebt. Bevorzugt wird zumindest ein Loch, vorzugsweise ein Dübelloch zum Einführen eines Dübels, durch die Brandschutzplatte und die Dämmplatte, sowie in die Außenwand des Gebäudes gebohrt. Bevorzugt wird die Fassade mit einem Dübel, besonders bevorzugt eine Dübelschraube zur Steuerung der axialen Ausdehnung des Dübels aufweisend, in die Dübellöcher an der Außenwand fixiert. Bevorzugt wird die Fassade, besonders bevorzugt mit einem Armierungsnetz, armiert und verspachtelt. Bevorzugt weist das Armierungsnetz Glasfasergewebe auf.

Hinsichtlich des Verfahrens zur Montage einer an einer Außenwand eines Gebäudes, ist es vorteilhaft, wenn eine weitere Brandschutzplatte der Brandschutzschicht an der Außenwand des Gebäudes montiert wird, wonach die Dämmplatte der Dämmschicht und die Brandschutzplatte der Brandschutzschicht an der Außenwand des Gebäudes montiert werden. Bevorzugt wird zunächst das Montageelement an der Außenwand des Gebäudes fixiert. Bevorzugt wird daraufhin die weitere Brandschutzplatte mit dem Montagelement fest verbunden oder die Dämmplatte an der Außenwand des Gebäudes montiert, sodass der weitere Schenkel des Montageelements im Wesentlichen von der Dämmplatte abgedeckt ist. Besonders bevorzugt wird die Dämmplatte an die Außenwand des Gebäudes geklebt, wobei besonders bevorzugt eine Klebeschicht den weiteren Schenkel des Montageelements abdeckt. Alternativ wird die weitere Brandschutzplatte mit dem Montagelement fest verbunden und daraufhin das Montageelement an der Außenwand des Gebäudes fixiert. Bevorzugt wird anschließend die Brandschutzplatte montiert.

Bei dem korrespondierenden Gebäude wird die Aufgabe dadurch gelöst, dass das Gebäude zumindest eine Außenwand, vorzugsweise aus Beton, und eine Fassade in einer der oben beschriebenen Ausführungsvarianten aufweist. Alternativ ist die Außenwand des Gebäudes aus Ziegeln und/oder Holz gefertigt.

Vorteilhaft hinsichtlich des Raumnutzung des Gebäudes weist die Außenwand inklusive Fassade im montierten Zustand eine Außenwandstärke von 25 - 35 cm, vorzugsweise 26 - 28 cm auf.

Vorteilhaft ist, wenn die Außenwand inklusive Fassade im montierten Zustand eine Außenwandstärke von 1 bis 20 cm, beispielsweise 8 bis 15 cm, vorzugsweise im Wesentlichen 13 cm, geringer ist als im Stand der Technik, d.h. als die Wandstärke einer Außenwand inklusive Mineralwolldämmplatte von 40 bis 50 cm, wobei die Mineralstoffplatte eine Wandstärke von 16 bis 18 cm aufweist. Besonders vorteilhaft ist, dass die Außenwand des Gebäudes inklusive Fassade eine dabei zumindest gleichwertige Dämm- und Brandschutzeigenschaften wie der Stand der Technik aufweist.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Die Zeichnungen zeigen dabei im Einzelnen:
Fig. 1 eine Schnittansicht durch die Fassade zur Anordnung an der Außenwand des Gebäudes und die Außenwand des Gebäudes entlang des Horizontalschnitts B - B (auf Höhe einer Aussparung in der Außenwand des Gebäudes);
Fig. 2 eine Detailansicht der Schnittansicht entlang des Horizontalschnitts B - B aus Fig. 1 und eine Detailansicht eines Horizontalschnitts A - A durch einen oberhalb der Aussparung des Außenwand des Gebäudes gelegenen Abschnitt der Fassade und der Außenwand des Gebäudes nach Fig. 1;
Fig. 3 Eine Seitenansicht und eine Frontansicht auf die Fassade und die Außenwand des Gebäudes nach Fig. 1 (Schnittführung A - A bzw. B - B ersichtlich);

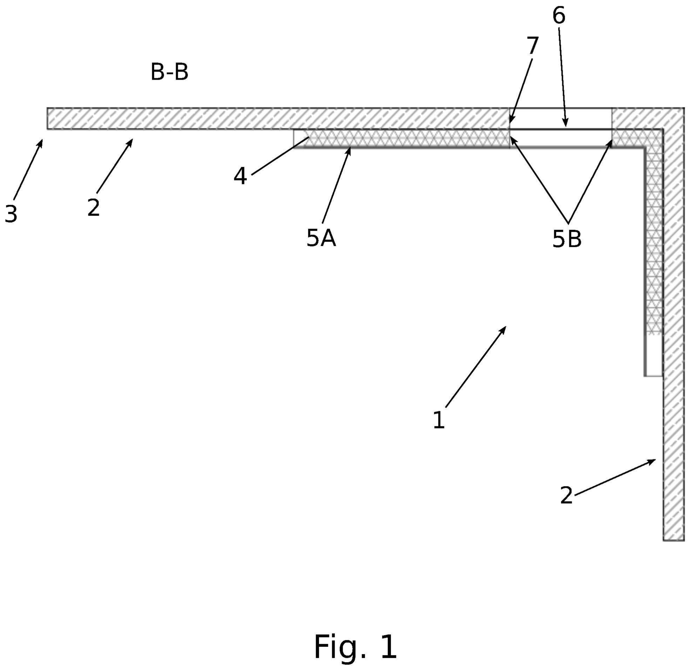

Fig. 1 zeigt eine Gebäudeecke eines Gebäudes 3, welches bevorzugt eine Höhe von mindestens 26 Metern aufweist. Ersichtlich ist ein Abschnitt einer Fassade 1 zur Anordnung an einer Außenwand 2 des Gebäudes 3 im montierten Zustand. Die Fassade 1 weist eine Dämmschicht und eine Brandschutzschicht auf. Die Fassade 1 ist an einer Außenseite, d.h. einer der Gebäudeumgebung zugewandten Seite der Außenwand 2 montiert. Die Fassade 1 deckt die Außenwand 2 vollständig ab.

Die Dämmschicht ist durch einzelne Dämmplatten 4 gebildet. Die Brandschutzschicht ist durch eine Brandschutzplatte 5A und weitere Brandschutzplatten 5B gebildet. Dabei ist die Brandschutzschicht weiter von der Außenwand der Außenwand 2 entfernt als die Dämmschicht, sodass die Dämmschicht von der Gebäudeumgebung aus nicht zugänglich ist.

Die Außenwand 2 weist eine Aussparung 6 für ein Fenster auf. Die weitere Brandschutzplatte 5B der Brandschutzschicht, schließt bündig mit einer Begrenzungsfläche 7 der Aussparung 6 ab. Die Aussparung 6 weist vier Begrenzungsflächen 7 auf, die ebenfalls mit der Fassade 1, insbesondere mit weiteren Brandschutzplatten 5B, bündig abschließen. Davon sind jeweils zwei einander zugekehrt. Davon sind jeweils zwei vertikal und zwei horizontal orientiert. Die Dämmschicht ist daher auch im Bereich der Aussparung 6 nicht von der Gebäudeumgebung zugänglich. Die Dämmschicht ist nicht von einer Stirnseite 9 der Dämmplatte aus zugänglich.

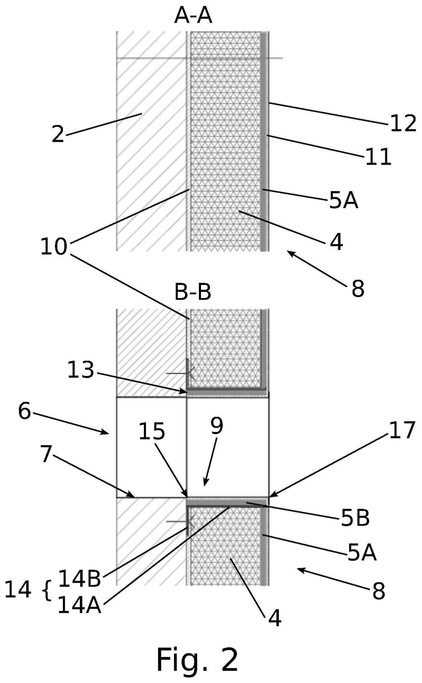

Die Schnittansicht A - A der Fig. 2 zeigt, dass die Dämmplatte 4 durch eine Klebeschicht 10 mit der Außenwand 2 verbunden ist. Die Klebeschicht 10 enthält Klebemörtel. An einer äußeren Flachseite 8 weist die Brandschutzplatte 5A eine Armierungsschicht 11 mit Armierungsnetz und eine Putzschicht 12 auf.

Die Detailansicht B - B der Fig. 2 zeigt, dass die weitere Brandschutzplatte 5B an die Brandschutzplatte 5A angrenzend angeordnet ist. Die Brandschutzplatte 5A ist rechtwinklig auf die weitere Brandschutzplatte 5B stehend angeordnet. Die Brandschutzplatte 5A und die weitere Brandschutzplatte 5B bilden eine Fassadenkante 17 aus. Die Brandschutzplatte 5A und die weitere Brandschutzplatte 5B grenzen an die dieselbe Dämmplatte 4 an. Dabei deckt die Brandschutzplatte 5A die äußere Flachseite 8 und die weitere Brandschutzplatte 5B die Stirnseite 9 der Dämmplatte 4 ab.

Eine Stirnseite 13 der weiteren Brandschutzplatte 5B ist an die Außenwand 2 angrenzend angeordnet. Ein Montageelement 14, im gezeigten Beispiel ein Montagewinkel, weist einen Schenkel 14a und einen weiteren Schenkel 14B auf. Das Montageelement 14 verbindet die weitere Brandschutzplatte 5B mit der Außenwand 2. Dabei ist der weitere Schenkel 14B an der Außenwand 2 fixiert. Der weitere Schenkel 14B trägt zumindest das Gewicht der weiteren Brandschutzplatte 5B trägt. Der Schenkel 14A ist im montierten Zustand zur Anordnung der Orientierung der weiteren Brandschutzplatte 4 vorgesehen. Der weitere Schenkel 14B ist im montierten Zustand zur Anordnung der Orientierung der Außenseite 2 vorgesehen. Entlang einer Begrenzungskante 15 der Aussparung 6, d.h. in der Zeichenebene des Horizontalschnitts B - B, ist zumindest ein Montageelement 14, vorzugsweise zwei Montageelemente 14, angeordnet. Alternativ ist nur ein Montageelement 14 zur Anordnung entlang der Begrenzungskante 15 vorgesehen, wobei sich das Montagelement 14 im Wesentlichen über die gesamte Begrenzungskante 15 erstrecken kann. Das Montageelement 14 wirkt im Brandfall vorteilhaft als zusätzliche schützende Schicht zwischen einem Brand und der Dämmplatte 4, d.h. an der Stirnseite 9 der Dämmplatte 4.

Das Montageelement 14, insbesondere der Schenkel 14A des Montageelements 14, verbindet die Brandschutzplatte 5A und die weitere Brandschutzplatte 5B miteinander. Die Brandschutzplatten 5A, 5B und das Montageelement 14 sind so angeordnet, dass geschmolzener Dämmstoff der Dämmplatte 4 nicht zwischen den Brandschutzplatten 5A,B und dem Montageelement 14 in die Gebäudeumgebung entweichen kann.

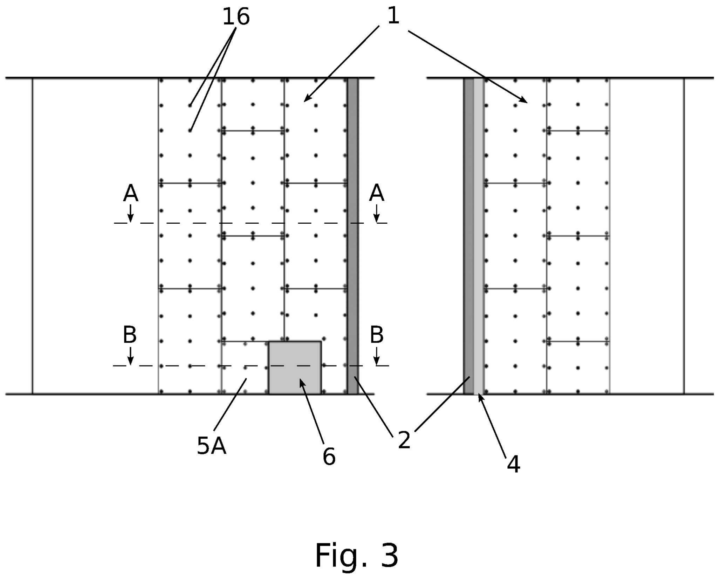

Fig. 3 zeigt die Fassade 1 von zwei Seiten. Ersichtlich ist, dass die Brandschutzschicht aus aneinander angrenzenden Brandschutzplatten 5A ausgebildet ist. Die Brandschutzplatte 5A weist regelmäßig beanstandete Dübellöcher 16 auf. Die Dübellöcher reichen durch die Dämmschicht und bis in die Außenwand 2 des Gebäudes, sodass die Brandschutzschicht fest mit der Außenwand 2 verbunden ist. Ersichtlich ist auch, dass die Brandschutzplatten 5A in beliebige Form, beispielsweise entsprechend der Aussparung 6 der Außenwand 2 entsprechend, zugeschnitten werden kann.

### Bezugsziffernliste:

1 Fassade
2 Außenwand
3 Gebäude
4 Dämmplatte
5A Brandschutzplatte
5B weitere Brandschutzplatte
6 Aussparung in der Außenwand
7 Begrenzungsfläche der Aussparung
8 Äußere Flachseite der Brandschutzplatte
9 Stirnseite der Dämmplatte
10 Klebeschicht
11 Armierungsschicht
12 Putzschicht
13 Stirnseite der weiteren Brandschutzplatte
14 Montageelement
14A Schenkel des Montageelement
14B weiterer Schenkel des Montageelement
15 Begrenzungskante der Aussparung
16 Dübellöcher
17 Fassadenkante

## Patentansprüche

1. Fassade (1) zur Anordnung an einer Außenwand (2) eines Gebäudes (3), aufweisend:
eine Dämmschicht zur Wärmedämmung,
**gekennzeichnet durch**:
eine Brandschutzschicht zur Erhöhung des Feuerwiderstands des Gebäudes (3),
wobei die Brandschutzschicht zumindest eine Magnesiumsilikat, vorzugsweise Talkum, enthaltende Brandschutzplatte (5A) aufweist,
wobei die Dämmschicht zumindest eine Dämmplatte (4) mit Schaumdämmstoff, vorzugsweise aus Polystyrol, aufweist.

2. Fassade (1) nach Anspruch 1, **dadurch gekennzeichnet, dass** die Brandschutzplatte (5A) Zement und/oder Dämmstoffpartikel, vorzugsweise Schaumdämmstoffpartikel, enthält.

3. Fassade (1) nach einem der Ansprüche 1 bis 2, **dadurch gekennzeichnet, dass** die Brandschutzplatte (5A) mit einem Verstärkungsmaterial, vorzugsweise Glasfaser, zur Verstärkung der Brandschutzplatte (5A) verstärkt ist.

4. Fassade (1) nach einem der Ansprüche 1 bis 3, **dadurch gekennzeichnet, dass**
die Brandschutzplatte (5A) eine Wandstärke von 0,5 bis 4 cm, vorzugsweise im Wesentlichen 1,2 cm, aufweist und/oder dass
die Dämmplatte (4) eine Stärke von 5 bis 30 cm, vorzugsweise im Wesentlichen 14 cm, aufweist.

5. Fassade (1) nach einem der Ansprüche 1 bis 4, **dadurch gekennzeichnet, dass**
die Brandschutzplatte (5A) eine Wärmeleitfähigkeit von 0,15 bis 0,4 W/mK, vorzugsweise im Wesentlichen 0,2 W/mK aufweist, und/oder dass
die Dämmplatte (4) eine Wärmeleitfähigkeit von 0,029 bis 0,04 W/mK, vorzugsweise im Wesentlichen 0,032 W/mK aufweist.

6. Fassade (1) nach einem der Ansprüche 1 bis 5, **dadurch gekennzeichnet, dass** die Dämmschicht zur Anordnung zwischen der Brandschutzschicht und der Außenwand (2) des Gebäudes (3) vorgesehen ist,
sodass die Dämmschicht im montierten Zustand der Fassade (1) im Wesentlichen vollständig von der Gebäudeumgebung getrennt ist.

7. Fassade (1) nach einem der Ansprüche 1 bis 6, **dadurch gekennzeichnet, dass** die Brandschutzschicht zumindest eine weitere Brandschutzplatte (5B) aufweist,
wobei die Brandschutzplatte (5A) im montierten Zustand der Fassade (1) an die weitere Brandschutzplatte (5B) angrenzend, vorzugsweise winkelig auf die weitere Brandschutzplatte (5B) stehend, angeordnet ist.

8. Fassade (1) nach Anspruch 7, **dadurch gekennzeichnet, dass** die Brandschutzplatte (5A) und die weitere Brandschutzplatte (5B) im montierten Zustand der Fassade (1) zumindest abschnittsweise an dieselbe Dämmplatte (4) der Dämmschicht angrenzend angeordnet sind.

9. Fassade (1) nach einem der Ansprüche 7 oder 8, **dadurch gekennzeichnet, dass** die weitere Brandschutzplatte (5B), vorzugsweise eine Stirnseite (13) der weiteren Brandschutzplatte (5B), im montierten Zustand der Fassade zur Anordnung an der Außenwand (2) des Gebäudes (3) vorgesehen ist.

10. Fassade (1) nach einem der Ansprüche 7 bis 9, **dadurch gekennzeichnet, dass** die weitere Brandschutzplatte (5B) im montierten Zustand der Fassade (1) zur Anordnung angrenzend an einer Begrenzungskante (15) einer Aussparung (6) der Außenwand (2) vorgesehen ist,
wobei vorzugsweise die weitere Brandschutzplatte (5B) zum bündigen Abschluss mit einer Begrenzungsfläche (7) der Aussparung (6) der Außenwand (2) vorgesehen ist.

11. Fassade (1) nach einem der Ansprüche 7 bis 10, **dadurch gekennzeichnet, dass** die Fassade (1) aufweist:
zumindest ein, vorzugsweise als Montagewinkel ausgebildetes, Montageelement (14),
wobei die weitere Brandschutzplatte (5B) im montierten Zustand der Fassade (1) zur Fixierung durch das Montageelement (14) an der Außenwand (2) des Gebäudes (3) vorgesehen ist.

12. Verfahren zur Montage einer Fassade (1) nach einem der Ansprüche 1 bis 11 an einer Außenwand (2) eines Gebäudes (3),
**dadurch gekennzeichnet, dass**:
eine Dämmschicht und eine Brandschutzschicht der Fassade (1) an der Außenwand (2) des Gebäudes (3) montiert werden.

13. Verfahren nach Anspruch 12, **dadurch gekennzeichnet, dass** eine weitere Brandschutzplatte (5B) der Brandschutzschicht an der Außenwand (2) des Gebäudes (3) montiert wird,
wonach die Dämmplatte (4) der Dämmschicht und die Brandschutzplatte (5A) der Brandschutzschicht an der Außenwand (2) des Gebäudes (3) montiert werden.

14. Gebäude (3)
**dadurch gekennzeichnet, dass**
das Gebäude (3) aufweist:
zumindest eine Außenwand (2), vorzugsweise aus Beton, und eine Fassade (1) nach einem der Ansprüche 1 bis 11.

15. Gebäude (3) nach Anspruch 14, **dadurch gekennzeichnet, dass** die Außenwand (2) inklusive Fassade (1) im montierten Zustand eine Außenwandstärke von 20 - 35 cm, vorzugsweise 26 - 28 cm aufweist.
